# EUROPEAN PATENT SPECIFICATION

(11) **EP 3 210 757 B1**
(45) Date of publication and mention of the grant of the patent: **11.09.2019**
(21) Application number: 16157086.6
(22) Date of filing: 24.02.2016
(51) Int. Cl.: B29C 67/00, B64F 5/00, F16L 3/08, F16B 1/00

(54) **METHOD OF INSTALLING A FIXTURE ON A STRUCTURE BY ADDITIVE MANUFACTURING**
VERFAHREN ZUR INSTALLATION EINER HALTERUNG AUF EINER STRUKTUR MITTELS ADDITIVEN FERTIGUNGSVERFAHREN
PROCÉDÉ D'INSTALLATION D'UN ÉLÉMENT DE FIXATION SUR UNE STRUCTURE EN PROCÉDÉ ADDITIF TRIDIMENSIONNEL

(43) Date of publication of application: 30.08.2017
(73) Proprietor: Airbus Operations GmbH, 21129 Hamburg (DE)
(72) Inventor: GOEHLICH, Robert Alexander Dr., 21129 Hamburg (DE); HIRABAYASHI, Daisuke, Tokyo 181-0015 (JP); HOSHI, Hikaru Dr., Tokyo 181-0015 (JP)
(74) Representative: Isarpatent

(56) References cited:
- EP-A1- 2 813 432
- WO-A1-2013/173742
- DE-A1-102012 204 723
- US-A- 4 576 664
- CHRISTIAN SCHUMACHER ET AL: "Microstructures to control elasticity in 3D printing", ACM TRANSACTIONS ON GRAPHICS (TOG), vol. 34, no. 4, 27 July 2015 (2015-07-27), pages 136:1-136:13, XP055292197, US ISSN: 0730-0301, DOI: 10.1145/2766926

## Description

The present invention relates to a method of installing a fixture, such as a bracket, on a body structure of a vehicle, particularly a body or fuselage structure of an aircraft or spacecraft, for mounting or attaching one or more items or systems with respect to that structure, as defined in claim 1. The invention also relates to a system comprising a structure of an aircraft or spacecraft and a fixture manufactured as described above, as defined in claim 8. It will be noted that the term "spacecraft" as used herein includes satellites and space station modules, as well as rockets and rocket modules, spaceships, or parts thereof.

The installation of items and/or systems, such as electrical systems with conduits and cables, in nautical, aeronautical or automotive applications typically involves the use of mounting fixtures or brackets which need to be secured to a structure (e.g. a vehicle chassis or hull structure) for then supporting those systems. Conventionally, these fixtures are secured to the structure via fasteners, such as rivets, clips or screws, or via an adhesive.

Some disadvantages of mechanical fasteners, like rivets and screws, include that the fixture or bracket requires bores for the fasteners, that the fixture needs to be positioned with respect to the bores, and that it requires a fastening operation to then secure the fasteners. Depending on the particular application, the fixture or bracket may also then need to be sealed around the fasteners and bores. These steps naturally involve process costs. Disadvantages of adhesive attachment include that both the fixture or bracket and the attachment surface may require pre-treatment, like roughening and/or degreasing, and that an adhesive application operation is needed, then followed by operations to position and mount the fixture or bracket under application of pressure. These steps again involve process costs.

EP 2 813 432 A1 describes a method of installing a fixture, such as a bracket, in a fuselage structure of an aircraft.

"Microstructures to control elasticity in 3D printing" by Christian Schumacher et al., ACM Transactions on Graphics (TOG), vol. 34, no.4, 27 July 2015, pages 136:1-136:13, describes a method for fabricating deformable objects with spatially varying elasticity using 3D printing.

WO 2013/173742 A1 describes adhesives for use with a 3D printer comprising a first polymeric component comprising a poly(vinyl alcohol) and a second polymeric component.

US 4 576 664 A describes a fixing device for use on hard surfaces such as exterior walls, wood, glass or metal for supporting elements, particularly elongate elements, against such surfaces.

It is therefore an object of the present invention to provide a new and improved method or technique for overcoming one or more of the problems discussed above. In particular, it would be useful to provide a new method of installing a fixture or bracket in a structure of an aircraft or spacecraft, with which a faster or more economical procedure may be realized. Significant advances have been made in these respects by the present applicant, as described in published European patent application EP 2 813 432 A1. Nevertheless, it remains a goal to further develop and optimise such techniques.

It would also be useful to provide a new and improved fixture or bracket in or on a structure of an aircraft or spacecraft which improves production efficiency and work-flows. It would further be desirable to provide a new and improved apparatus for installing such a fixture or bracket in or on a structure of an aircraft or spacecraft.

In accordance with this invention, a method of installing a fixture as recited in claim 1, and a corresponding system as recited in claim 8, are provided for mounting or attaching an item or system with respect to a structure, especially in nautical, aeronautical, and automotive applications. Further, in accordance with this disclosure, a vehicle as recited in claim 14, e.g., an aircraft or spacecraft, is also provided. Preferred features are recited in the dependent claims.

According to one aspect, therefore, the invention provides a method of installing a fixture, such as a bracket, in or on a structure of a vehicle, such as a body or fuselage structure of an aircraft or spacecraft, comprising the steps of:
arranging a head of an additive manufacturing apparatus in or on or adjacent the structure; and
forming the fixture in situ on the structure with or via the head of the additive manufacturing apparatus based upon a digital model of the fixture;
wherein the fixture is installed in or on the structure by connecting the fixture (e.g., mechanically, or via bonding or fusing) to the structure as the fixture is formed, wherein the step of forming the fixture in situ comprises:
   forming an anchored portion of the fixture which is non-movably fixed to the structure, and
   forming an operable portion of the fixture which is movable relative to the anchored portion;
   wherein the operable portion is formed locally attached to the structure and is separable by peeling or breaking the local attachment, for movement relative to the anchored portion.

In this way, the installation of the fixture may essentially occur automatically with the formation of the fixture itself. Thus, the method provides maximum flexibility in the fuselage assembly procedure and does not require separate or external manufacture of individual fixtures or brackets. There is also no need for any inventory of spare parts, as the fixtures are created directly from the digital model during installation. Similarly, there is no need for non-flying parts, e.g., which may be required to fix a bracket on the structure during a curing process but which are then later removed. Furthermore, the design of the fixture encompasses a range of variants and can be readily adapted as design parameters change.

In a preferred embodiment, the step of forming the fixture in situ in or on the structure comprises building the fixture by sequentially generating and/or by building up layers of the fixture via the head of the additive manufacturing apparatus. In this regard, the layers of the fixture may be sequentially deposited on the structure, such that the fixture is able to be built up from these layers to its final three-dimensional form based on the digital model. Accordingly, in a preferred embodiment, the step of connecting the fixture to the body or structure comprises one or more of the layers of the fixture being bonded or fused to the fuselage structure as it or they are generated and/or deposited on the vehicle structure. Alternatively, or in addition, the one or more layers of the fixture may be bonded or fused to the fuselage structure in a curing step that follows after the layers have been generated and/or deposited on the vehicle structure.

In a preferred embodiment, the step of bonding of the fixture to the structure includes depositing one or more layers or regions of adhesive on the structure to which the fixture is to be connected. The depositing of the layer(s) or region(s) of adhesive preferably occurs before generating and building up layers of the fixture on the structure. The one or more layers or regions of adhesive is/are deposited at least in a region of the anchored portion of the fixture, and optionally solely in the region of the anchored portion of the fixture. In this way, the adhesive may act to ensure that the anchored portion is non-movably fixed to the structure.

In another preferred embodiment, the step of connecting the fixture to the structure may include forming the fixture in a mechanical fit or a mechanical engagement or connection with part of the structure. Indeed, the step of connecting the fixture to the structure may also comprise a combination of bonding or fusing, together with a mechanical engagement or connection.

In a preferred embodiment of the method, the anchored portion of the fixture forms a holder or a retainer for supporting one or more items or elements of a system to be mounted on the structure. In this context, the operable portion of the fixture may comprise a fastener for securing the item(s) or element(s) to the holder. For example, the operable portion is movable and may be configured to wrap around or encompass the one or more items or elements in the manner of a strap or tie to bind and secure the item(s)/element(s) to the holder. Furthermore, the fixture may include means to fasten, and especially to adjustably fasten, the operable portion with respect to the anchored portion to bind or secure the item(s) or element(s) in position.

According to the invention, the operable portion is formed locally attached to the structure and is configured to be separable from the structure by peeling or breaking the local attachment, for movement relative to the anchored portion. In this way, the operable portion of the fixture is installed in an inoperative position locally attached to the structure. An operator who may, for example, be charged with the task of installing an electrical system having conduits and cables using the mounting fixtures of the invention, may thus break or separate the local attachment of the operable portion in order to move the operable portion of the fixture into an operative position for fixing or securing the conduits and cables to the anchored portion.

In a preferred embodiment, the method is designed or adapted for use with a structure comprised of a composite material, especially of a fibre-reinforced polymer composite, such as a glass fibre-reinforced polymer (GFRP) composite or a carbon fibre-reinforced polymer (CFRP) composite. Thus, the additive manufacturing apparatus may be configured to generate or form the fixture from a material that is adapted to fuse or bond with a fibre-reinforced polymer in the structure. It will be appreciated, however, that the method may also be carried out with a body structure comprised of a metal, as is typical in conventional airframes and fuselage structures, such that the additive manufacturing apparatus is configured to generate or form the fixture from a material that can fuse or bond with the metallic structure. In addition to the fused or bonded connection that arises via this method, the fixture may also be secured with supplementary mechanical fasteners, such as rivets, screws, bolts or the like; such additional fasteners can be used to augment a connection of the fixture to the vehicle structure.

In a particularly preferred embodiment of the invention, the step of forming or building the fixture with the additive manufacturing apparatus comprises any one or more of: fused deposition modelling (FDM), laser sintering (LS), selective heat sintering (SHS), and stereo-lithography (SLA). These techniques may be generally referred to as three-dimensional (3D) printing. In the case of stereo-lithography (SLA), the fixture will then typically be formed from a photo-polymer material, such as a UV-curable or UV-sensitive polymer. In the case of a fused deposition modelling (FDM) procedure, the fixture may be formed from a curable polymer or thermoplastic polymer, such as acrylonitrile butadiene styrene (ABS) or a high-density poly-ethylene (HDPE), or from a metal, like a eutectic metal. In the case of selective heat sintering (SHS) or laser sintering (LS), the fixture may be formed from near any metal alloy, which is typically provided in a powdered or granular form, but also from a range of polymers that may also be in a powdered or granular form. Examples of polymers that would be suitable for series production of fixtures with a method of the present invention include DSM Somos® products NanoTool™, NanoForm™, and ProtoTherm™. These polymers are UV-curable, such that they may be hardened by irradiation with UV-light after their deposition in a final shape of the fixture. In this regard, these DSM Somos® polymers typically have a bending stiffness in the range of 79 to 121 N/mm² and tension stiffness in the range of 62 to 78 N/mm² after UV-hardening. Other suitable polymers include aliphatic or semi-aromatic polyamides, such as Nylon (Toray SQ133).

In a particularly preferred embodiment, the three-dimensional digital model of the fixture includes data on a specific or desired position of the fixture within or on structure. Thus, the step of forming the fixture in situ preferably includes positioning the head of the additive manufacturing apparatus within or on the structure based upon the data concerning the specific or desired position in the digital model. To this end, the body or fuselage structure may include one or more reference markers for providing a spatial correlation to reference points in the digital model of the fixture. One or more sensors may be provided for detecting and identifying the reference markers and then positioning the head of the additive manufacturing apparatus based upon the detected and identified reference markers.

The positioning and movement of the additive manufacturing apparatus is preferably computer-controlled. For example, the additive manufacturing apparatus or the head thereof may be provided on a robotic assembly or a robotic arm, which is controllable to move and position the head of the apparatus based upon the 3D digital model of the fixture. In this way, a very precise positioning of a fixture or bracket in or on the body structure can be achieved, and with a high level of repeatability.

Although the method of the disclosure has been described above with specific reference to a vehicle, such as an aircraft or spacecraft, it will be appreciated by persons skilled in the art that the disclosure is also applicable to non-vehicular structures. For example, the disclosure also provides a method of installing a fixture, such as a bracket, on a stationary structure, such as a mast or tower for a wind turbine or for an antenna (e.g., communication or TV antenna), a building, or other such structure. Furthermore, although the fixture may be installed with the disclosed method during fabrication of the structure itself, it may also be subsequently installed in situ, e.g., via a climbing or crawling robot assembly in the case of a mast, tower, building, or space station.

Thus, according to a further aspect, the disclosure provides a method of installing a fixture, such as a bracket, on a body or structure, comprising the steps of:
providing or creating a three-dimensional digital model of the fixture;
arranging a head of an additive manufacturing apparatus on or adjacent the structure; and
forming the fixture in situ on the structure with or via the head of the additive manufacturing apparatus based upon the digital model of the fixture;
wherein the fixture is installed on the structure by connecting it to the structure as the fixture is formed, and wherein the step of forming the fixture in situ comprises:
   forming an anchored portion of the fixture which is non-movably fixed to the structure, and
   forming an operable portion of the fixture which is movable relative to the anchored portion.

In the context of this description of the invention, it is to be appreciated that the step of "forming" the fixture or of "forming" any portion thereof may be understood in the sense of producing or fabricating that fixture or the said portion thereof.

By employing the above method in space via a robot assembly that incorporates the additive manufacturing apparatus or 3D printer, e.g. to carry out a repair or an installation job on a hull or outside of an orbiting space station, an astronaut can be spared the necessity of a space-walk and associated risk. In other words, the fixture may be installed with the inventive method via a robot, which may operate unimpeded and substantially without risk in the environment of space. Thus, a movable robotic device, such as a climbing or crawling robot, can be used to perform the method of the invention.

In a particularly preferred embodiment of the invention, the digital model for the fixture may be created and/or modified during the installation procedure. Where the method is being carried out, for example, to conduct a repair of part of the structure, it may first be necessary to inspect and/or assess the part to be repaired before the precise shape and/or size of the fixture required can be ascertained. To this end, the method of the invention may include the step of examining a part of the structure to assess and/or determine the geometry and/or the dimensions of the fixture required, then providing or creating the three-dimensional (3D) digital model of the fixture based on the results of that examination. The robot assembly may therefore include examination equipment, such as a camera and/or one or more sensors to inspect and/or examine the part of the structure of interest.

An extension of the above concept includes the possibility of the additive manufacturing apparatus or 3D printer, e.g., set or provided on a robot, also generating or forming structural fixtures or elements for installation on the structure (e.g., on a hull of a space station). Such fixtures or elements may also be provided in the form of tracks or rails, which may then influence or determine the movement or progress of the robot itself. These elements can, for example, be designed to chart or define a path of the robot to a specific location at which a repair may need to be undertaken.

According to another aspect, the present invention provides a system comprising a structure of an aircraft or spacecraft and fixture, manufactured according to any of claims 1 to 7. The fixture, such as a bracket, is generated in situ in or on the structure, based on a three-dimensional digital model, wherein the fixture is connected, preferably adhesively bonded and/or fused, to that structure as the fixture is formed, and wherein the fixture comprises an anchored portion which is non-movably fixed to the structure and an operable portion which is movable relative to the anchored portion.

As noted above, the fixture is preferably bonded and/or fused to the structure as the fixture is formed. Alternatively, or in addition, the fixture may be mechanically connected to the structure as the fixture is formed.

In a particularly preferred embodiment, the anchored portion of the fixture comprises a holder or retainer for supporting one or more elements or items of a system to be mounted on the structure. On the other hand, the operable portion of the fixture preferably comprises a fastener for securing the one or more elements or items to the holder. In this regard, for example, the operable portion may comprise a strap or tie to secure one or more elements or items (e.g., items of a system to be mounted on the structure) to the fixture. Furthermore, the fixture preferably includes means for binding or fastening the operable portion with respect to the anchored portion in order to securely hold or retain the one or more elements or items in the desired position.

In a preferred embodiment, the operable portion is installed with a local attachment to the structure. In this regard, the local attachment is configured to be removable, especially by peeling, breaking or severing, to move the operable portion relative to the anchored portion. In the initially installed state, therefore, the operable portion of the fixture may be in an inoperative position. It should be appreciated that, although the preferred form of a "fixture" in the context of the present disclosure is a bracket or similar such mounting device, a "fixture" in the context of this disclosure is not limited to brackets or such mounting devices, but may also encompass a lining panel or a shell of cabin or an interior cladding component of the structure or vehicle.

In a preferred embodiment, the fixture comprises sequentially generated or deposited layers which are bonded or fused to the body or fuselage structure. As noted above, the fixture may be formed from a polymer material, such as a UV-curable polymer, or a thermoplastic polymer, such as acrylonitrile butadiene styrene (ABS) or high density polyethylene (HDPE), or from a metal, such as a eutectic metal, including from one or more metal powders. Furthermore, in a particularly preferred form of the invention, a position of the fixture in the fuselage structure is based upon the digital model.

According to a further aspect, the present disclosure provides a vehicle, such as an aircraft or spacecraft, having a body or fuselage structure incorporating at least one fixture, and preferably several, according to any one of the embodiments described above. In this regard, the vehicle may be any of various known transportation means, including but not limited to a train, car, truck, bus, ship, boat, air-ship, helicopter, and/or space vehicle. The body structure of the vehicle may thus be a chassis or frame of the vehicle.

According to another aspect, the present disclosure provides an apparatus, especially an additive manufacturing apparatus, for forming and/or installing a fixture, such as a bracket, in or on a structure, especially a fuselage structure, of an aircraft or a spacecraft. The apparatus is configured to be positioned in, on, or adjacent the structure and comprises a head for building the fixture sequentially, especially by generating and building up layers of the fixture on the structure, wherein the layers of the fixture are sequentially deposited on the structure by the head.

In a preferred embodiment, the head of the apparatus includes a nozzle portion configured for dispensing and/or applying a bonding adhesive, especially in layers or filaments, to the structure. Furthermore, the nozzle portion is also configured for dispensing and/or applying one or more layers of filling material for generating and building up layers or filaments of the fixture on the structure. In this regard, the nozzle portion may be configured with two (or more) separate nozzle outlets, one of which is adapted to dispense and/or apply the adhesive and the other of which is adapted to dispense and/or apply the filling material of the fixture. In this way, one single nozzle portion can operate for applying both adhesive and then the filling material to generate the fixture. The two (or more) nozzle outlets may be designed with different dimensions to suit the different materials and may also need to operate at different temperatures to suit the properties of the adhesive and the filling material, respectively. The concept of one head having two outlet nozzles also allows use of the adhesive in a fast production process.

In a preferred embodiment, the head of the apparatus includes at least one distance sensor, and more preferably a plurality of distance sensors and/or contact sensors, for measuring or sensing a position or spacing of the head with respect to the structure on which the fixture is to be formed. A high level positioning accuracy of the additive manufacturing apparatus (e.g. 3D printer) head is important for fineness of its layer pitch. This means not only robot arm positioning, but also relative accuracy of the head with respect to the structure (e.g., fuselage). In this regard, using an additive layer manufacturing (ALM) head that includes three or four touch sensors or distance sensors can help to guarantee the positioning accuracy of the 3D printer head at an end of the robot arm close to the (fuselage) structure. As the head on the robot arm moves closer to a stored installation position, movement of the 3D printer head slows down, and the relative position may be adjusted via the touch/distance sensors.

In a preferred embodiment, the head of the apparatus is able to pivot or rotate about at least one axis, more preferably about two axes. In other words, the head of the apparatus may be articulated for pivoting or rotating movement via at least one pivot joint, and preferably two pivot joints. In the case of two pivot joints, the pivot axes are preferably mutually perpendicular; e.g. a vertical axis and a horizontal axis. In this way, the head of the ALM apparatus provided on a robotic arm may be highly manoeuvrable to assist installation of the fixture in very confined spaces and/or when the fixture is to be formed from both sides of a structural member. In this regard, it will be noted that a fixture may be mechanically connected to the structure via one or more holes or apertures through a structural member. By using an existing hole or the dimensions of aircraft elements, the shape may fix a bracket without using adhesive. For a vertical surface (such as outer surface and frame), an articulating head is useful to avoid the 3D printer head from interfering with the structure and enables the head to approach to an installation position from various angles.

For a more complete understanding of the present invention and the advantages thereof, exemplary embodiments of the invention are explained in more detail in the following description with reference to the accompanying drawings, in which like reference characters designate like parts and in which:
- Fig. 1: is a schematic side view of a section of a fuselage or hull structure of an aircraft, upon which a fixture or bracket is being installed according to an embodiment of the invention;
- Fig. 2: shows four schematic side views (a) to (d) of the fuselage or hull structure in Fig. 1, upon which the fixture or bracket is being installed according to an embodiment of the invention;
- Fig. 3: schematically shows three stages (i) to (iii) of a method or technique of installing the fixture or bracket according to a particular embodiment;
- Fig. 4: is a schematic perspective view of a fixture or a bracket according to a preferred embodiment of the invention;
- Fig. 5a: shows a schematic perspective view of a fixture or bracket according to an embodiment with the fixture or bracket installed and in operation on a fuselage or hull structure;
- Fig. 5b: shows a schematic perspective view of a fixture or bracket according to an embodiment with the fixture or bracket installed and in operation on a fuselage or hull structure;
- Fig. 6: is a schematic partially cross-sectional view of a head of an additive manufacturing apparatus on a robot arm for installing a fixture according to an embodiment of the invention;
- Fig. 7: is a schematic side view of a nozzle on the head of an additive manufacturing apparatus according to an embodiment of the invention;
- Fig. 8: shows two schematic perspective views (a) and (b) of the nozzle in Fig. 7;
- Fig. 9a: shows a schematic perspective view of a head of an additive manufacturing apparatus on a robot arm for installing a fixture according to an embodiment of the invention;
- Fig. 9b: is a schematic side view of the head of an additive manufacturing apparatus in Fig. 9a;
- Fig. 10: is a flow diagram which schematically illustrates a method according to a preferred embodiment;
- Fig. 11: is a schematic illustration of an aircraft in which one or more brackets according to an embodiment of the invention are installed; and
- Fig. 12: is a schematic view of a space station upon which a fixture or element is being installed according to an embodiment of the invention.

The accompanying drawings are included to provide a further understanding of the present invention and are incorporated in and constitute a part of this specification. The drawings illustrate particular embodiments of the invention and together with the description serve to explain the principles of the invention. Other embodiments of the invention and many of the attendant advantages of the invention will be readily appreciated as they become better understood with reference to the following detailed description.

It will be appreciated that common and well understood elements that may be useful or necessary in a commercially feasible embodiment are not necessarily depicted in order to facilitate a more abstracted view of the embodiments. The elements of the drawings are not necessarily illustrated to scale relative to each other. It will further be appreciated that certain actions and/or steps in an embodiment of a method may be described or depicted in a particular order of occurrences while those skilled in the art will understand that such specificity with respect to sequence is not necessarily required. It will also be understood that the terms and expressions used in the present specification have the ordinary meaning as is accorded to such terms and expressions with respect to their corresponding respective areas of inquiry and study, except where specific meanings have otherwise been set forth herein.

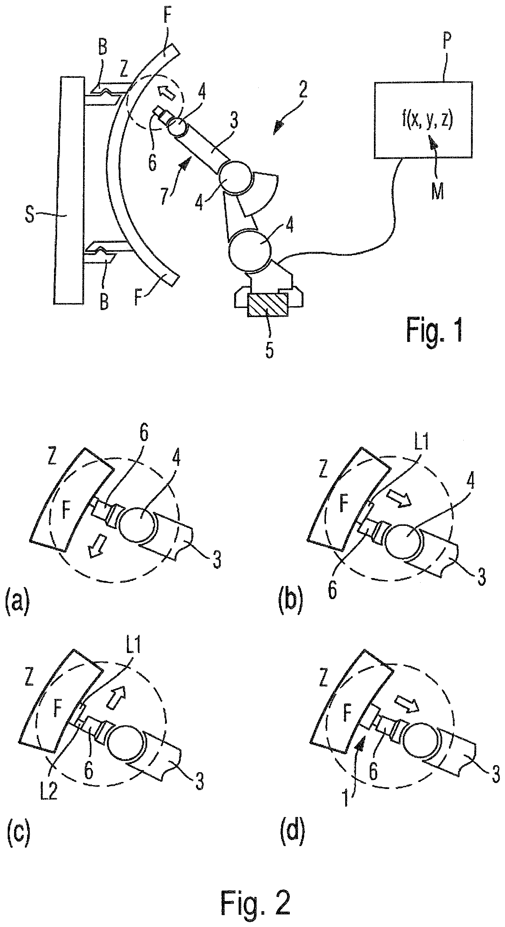

With reference firstly to Fig. 1 of the drawings, a system for installing a fixture 1 (here in the form of a bracket) on an airframe or fuselage structure F of an aircraft according to a method of the disclosure is illustrated schematically. The airframe or fuselage structure F of the aircraft in this embodiment comprises a curved shell section of the fuselage, comprised of a carbon-fibre reinforced polymer composite, which is supported in this case by brace elements B extending horizontally from a vertically extending supporting framework S. Also shown in Fig. 1 is a robot assembly 2, which includes a robotic arm 3 having a plurality of articulated joints 4, each of which is drivable in at least one and preferably in a number of degrees-of-freedom. The robot assembly 2 is itself mounted for translational movement along a rail member 5 in a direction perpendicular to a plane of drawing Fig. 1.

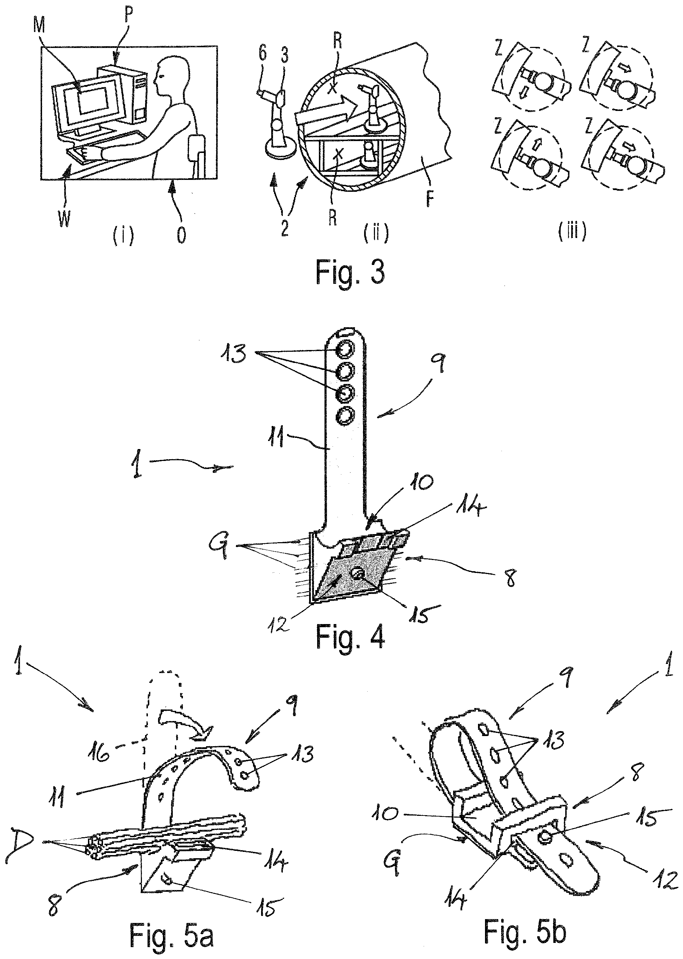

Mounted on a distal end region of the robot arm 3 is a head 6 of an additive manufacturing apparatus 7, which is generally understood or may be referred to as a 3D printer device. This additive manufacturing apparatus 7 may operate on any one of the known 3D printing techniques, such as fused deposition modelling (FDM), laser sintering (LS), or stereo-lithography (SLA). Particularly preferred in this embodiment is a fused deposition modelling (FDM) apparatus 7. The movement of the robotic assembly 2, and more particularly of the robot arm 3 via the articulated joints 4 and its position along the rail member 5, are computer-controlled via a computer processor P (illustrated schematically here, and shown later in Fig. 3), which also controls operation of the additive manufacturing apparatus 7. To commence the installation of a new fixture or bracket 1 according to the disclosed method, the head 6 of the apparatus 7 is moved by the robot arm 3 in the direction of the arrow in Fig. 1 to a predetermined position Z on the fuselage shell F.

Referring now also to Figs. 2(a) to 2(d) of the drawings, the steps of forming or building the fixture or bracket 1 in the fuselage structure F is illustrated in the series of four images (a) to (d). In the image of Fig. 2(a), the head 6 of the FDM apparatus 7 arranged at the distal end region of the robotic arm 3 has been moved into proximity with a surface of the fuselage structure F of the aircraft at the position Z. A three-dimensional digital model M of the fixture or bracket 1 is provided or generated in the computer processor P and, based upon the data in this digital model M of the bracket 1, the computer processor P then controls the head 6 of the FDM apparatus 7 to deposit layers of polymer material onto the CFRP fuselage structure as the head 6 of the apparatus 7 is moved along the surface of shell structure F in the direction of the arrow in Fig. 2(a). Then, in Fig. 2(b), one or more layers L1 of the bracket 1 has/have been deposited upon the fuselage structure F at the predetermined position Z, which layer(s) is/are bonded or fused to CFRP structure F.

The head 6 of the FDM apparatus 7 is then moved slightly away from the fuselage structure F in the direction of the arrow shown in Fig. 2(b). As shown in Fig. 2(c), the head 6 may then commence deposition of one or more new layers L2 of the polymer material, which builds upon the previous layers L1 and thus builds-up the three-dimensional shape or form of the fixture or bracket 1. This procedure continues with reference to Fig. 2(d) of the drawings until the final 3D shape of the bracket 1 has been completed.

With reference also now to Fig. 3 of the drawings, the method according to this preferred embodiment of the invention is illustrated in the three stages (i) to (iii). For example, in Fig. 3(i) an operator O is shown at a work-station W of the computer processor P engaged in the task of providing and/or generating the three-dimensional (3D) digital model M of the fixture or bracket 1 to be installed according to the method of this embodiment. The computer processor P at which the operator O is working is also responsible for the computer-controlled operation of the robot assembly 2 and the additive manufacturing apparatus 7 described above with respect to Figs. 1 and 2.

Fig. 3(ii) schematically illustrates the step of positioning the robot assembly 2 with respect to the fuselage structure F upon which the bracket 1 is to be formed and installed. In this regard, the robot assembly 2 is movable on one or more rails 5 within the tubular fuselage structure F, preferably on one of a plurality of separate rails 5, e.g., at separate heights or separate floors in the fuselage F. In this regard, the fuselage structure F may be a tubular shell as seen in Fig. 3(ii), rather than just a shell section shown in Fig. 1. Also, the robot assembly 2 may include a plurality of robotic arms 3 for simultaneously operating at various different positions Z within the fuselage structure F, i.e. in order to simultaneously build and install a plurality of fixtures or brackets 1 at different positions.

With regard to the positioning of the robotic assembly 2, the digital model M of the fixture or bracket 1 may include data concerning a specific desired or predetermined position Z of a particular bracket 1 on the fuselage structure F. This data can then be used together with reference markers R provided on the fuselage structure F, which are preferably detectable and identifiable by sensors (not shown) provided on the robot assembly 2 to give spatial correlation for moving the robotic arm 3 relative to the fuselage structure F, and particularly the head 6 of the additive manufacturing apparatus 7, to the correct position Z for forming and installing that particular bracket 1 based upon the data in the digital model M.

Fig. 3(iii) essentially corresponds to Fig. 2 of the drawings and schematically illustrates the sequential deposition or layer build-up and installation of a particular bracket 1 at the desired or predetermined position Z within the fuselage structure F, with the bracket 1 being simultaneously bonded or fused to the material of the fuselage structure F.

Referring to Fig. 4 of the drawings, an example of a fixture or bracket 1 installed via the method shown in Figs. 2(a) to 2(d) and in Fig. 3(iii) is illustrated in a perspective view. The fixture or bracket 1 comprises an anchored portion 8 in the form of a wedge or block that is non-movably fixed to the fuselage F. In addition, the fixture or bracket 1 comprises an operable portion 9 which is configured to move relative to the anchored portion 8. In particular, it will be noted that the anchored portion 8 of the bracket 1 comprises a curved holder 10 for supporting elements or items D, such as cables or conduits, of an electrical system to be mounted on the structure F. The operable portion 9 of the bracket 1, on the other hand, comprises a strap or tie 11 to secure the cables or conduits D to the bracket. In this regard, the bracket 1 includes means 12 for binding or fastening the strap 11 with respect to the anchored portion 8 in order to securely hold or retain the cables or conduits D in the desired position within the holder 10. To this end, the means 12 for binding or fastening comprise holes 13 formed in the strap 11, which are configured to cooperate with a slot 14 and pin 15 formed on the wedge- or block-shaped anchored portion 8. In this respect, Figs. 5a and 5b of the drawings illustrate slightly modified embodiments of the fixture or bracket 1 compared to Fig. 4 but nevertheless illustrate the general principles of its use or operation.

In this context, it will be noted that the operable portion 9 comprising the strap or tie 11 may be installed with a local attachment 16 via a weak fusing or bonding to the structure F. Thus, this local attachment of the operable portion 8 may be severable, for example by peeling the strap or tie 11 from the structure F to move the operable portion 9 relative to the anchored portion 8. In an initially installed state (e.g. shown by the broken lines in Fig. 5a) therefore, the operable portion 9 of the bracket 1 may be in an inoperative position. After the strap or tie 11 has been wrapped over or around the cables or conduits D on the holder 10 of the bracket 1 and passed through the slot 14 such that one of the holes 13 may receive and engage the pin 15 to securely fasten the cables or conduits D on the bracket 1, as shown in Fig. 5b, any excess length at a projecting free end of the strap or tie 11 may optionally be cut off to shorten that projecting end.

In the method of installing a fixture or bracket 1 according to this invention, the anchored portion 8 of the bracket 1 is non-movably fixed (i.e. anchored) to the structure F. This may involve forming this anchored portion 8 of the bracket 1 in a mechanical fit or a mechanical engagement or connection with part of the fuselage structure F. However, it may also involve the anchored portion 8 of the bracket 1 being bonded to the structure F as it is generated and/or deposited on the structure. Thus, the step of bonding the anchored portion 8 to the structure F preferably includes depositing one or more layers or regions of adhesive filament G (e.g., lines of glue or adhesive filament G, as in Fig. 4) to which the bracket 1 is to be connected. In this regard, depositing the one or more layers or regions of adhesive filament G occurs before generating or building up layers L1, L2 of the bracket, and especially the anchored portion 8, on the structure. To this end, the applied layer(s) or region(s) of adhesive filament correspond at least to a region of the anchored portion 8 of the bracket, and desirably solely to a region of the anchored portion 8 of the bracket 1. In this way, the adhesive acts to ensure that the anchored portion 8 is non-movably fixed to the structure F.

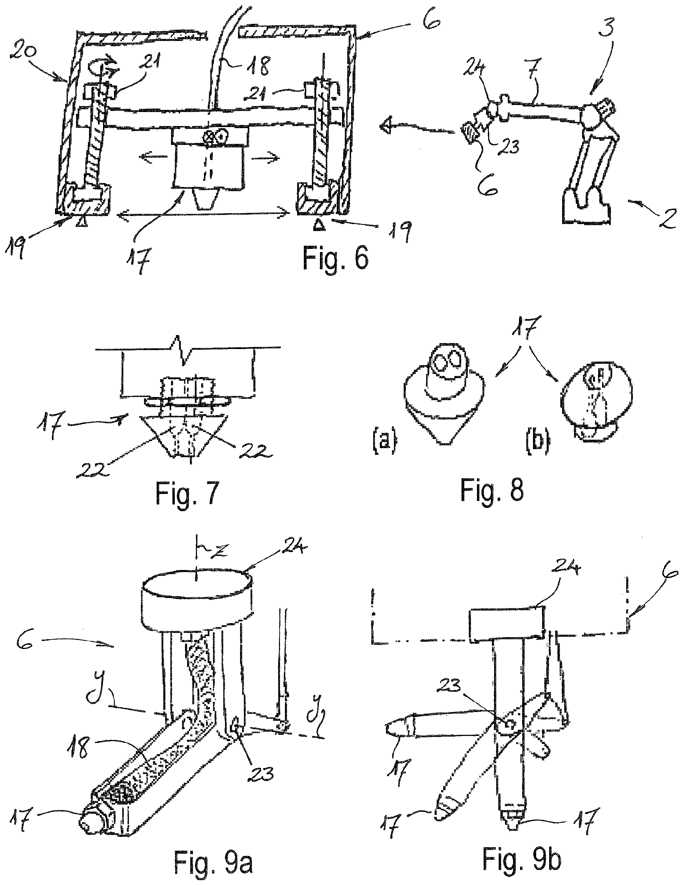

With reference to drawings Figs. 6 to 8, details of a head 6 of an additive manufacturing apparatus 7 mounted on a robot arm 3 of a robot assembly 2 for forming and/or installing a fixture, such as a bracket 1, in or on a fuselage structure F of an aircraft are shown schematically. As noted above, the head 6 is configured for building the bracket 1 sequentially, especially by building up layers L1, L2 of filling filament on the structure F. To this end, the head 6 includes a nozzle portion 17 for dispensing and applying the layers L1, L2 of filling filament material to generate or build up the bracket 1 on the fuselage F. The filling material is supplied to the nozzle portion 17 via supply line 18 after it has been preheated to a desired operating temperature. The head 6 of the apparatus 7 further includes a number of sensors 19, such as distance sensors or contact sensors, to measure or detect a position or spacing of the nozzle portion 17 with respect to a surface of the structure F on which the bracket 1 is to be formed, and a position adjustment mechanism 20 to provide high level positioning accuracy of the apparatus head 6 (e.g. 3D printer head) which is generally important for fineness of layers L1, L2. In this regard, the sensors 19 provide data to a control unit in the processor P to control operation of the position adjustment mechanism 20. The position adjustment mechanism 20 in turn includes threaded rods 21, which may be driven by the control unit to finely adjust a spacing of the nozzle portion 17 with respect to the surface of the fuselage structure F. The position adjustment mechanism 20 may also be drivable to displace the nozzle portion 17 laterally across the surface, as denoted by the arrows in Fig. 6.

Where the method of installing the bracket 1 involves bonding the anchored portion 8 to the structure F by depositing a layer or region of adhesive filament before the layers L1, L2 of the bracket 1, especially of the anchored portion 8, are generated and built up on the structure, it is particularly desirable that the nozzle portion 17 of the apparatus head 6 is configured as shown in Figs. 7 and 8. In this embodiment, the nozzle portion 17 is configured with two separate nozzle outlets 22, one of which is adapted to dispense and/or apply the adhesive filament and the other of which is adapted to dispense and/or apply the filling material of the bracket 1. In this way, one nozzle portion 17 can operate for applying both adhesive and then the filling material to generate the bracket 1. The separate nozzle outlets 22 are designed with different dimensions to suit the different materials and may also operate at different temperatures to suit the properties of the adhesive and the filling material, respectively. This concept of a single apparatus head 6 with dual nozzle outlets 22 optimizes use of the bonding adhesive in a fast production process.

Referring now to drawing Figs. 9a and 9b, an embodiment of an articulated apparatus head 6 is shown, which is especially practical when the fixture or bracket 1 is to be mechanically connected to the structure F, e.g. via one or more holes or apertures through a structural member. That is, by forming the fixture or bracket 1 in mechanical connection with a hole or aperture of a structural member, the form of the bracket 1 may fix the bracket without using adhesive. In such cases, a highly manoeuvrable head 6 is desirable to enable the head 6 to approach an installation position Z from various angles. To this end, the head 6 of the apparatus 7 in this embodiment is articulated to pivot or rotate about two pivot joints 23, 24 respectively defining two perpendicular axes y, z. In this way, the head of the ALM apparatus 7 provided on the robotic arm 3 is highly manoeuvrable to assist installation of the bracket 1 in confined spaces and/or when the bracket 1 is to be formed from both sides of a structural member.

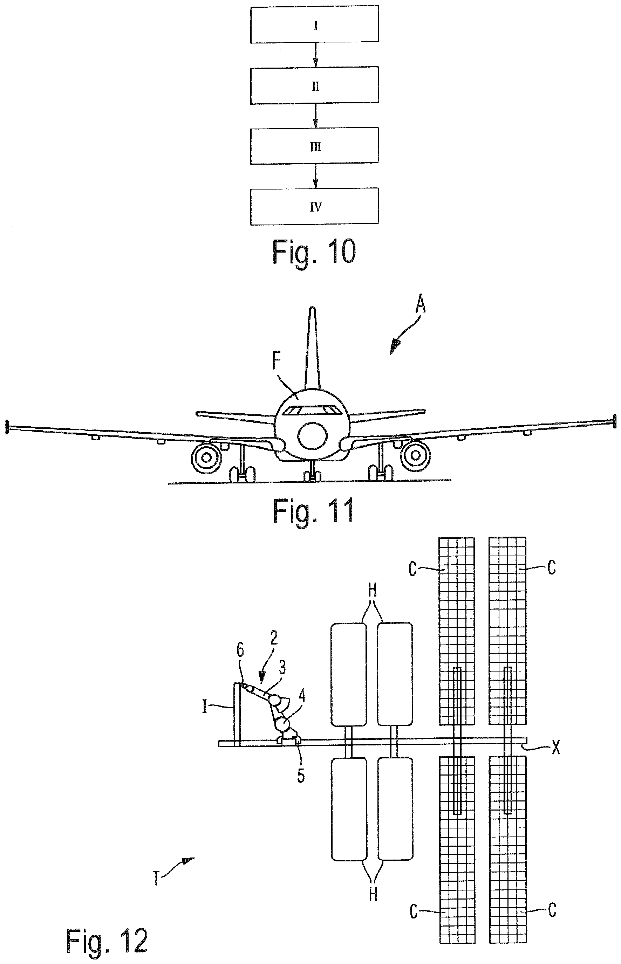

Referring now to Fig. 10 of the drawings, a flow diagram is shown that again schematically illustrates the steps in the method of the preferred embodiment. In this regard, the first box I of Fig. 10 represents the step of providing or the step of generating a three-dimensional (3D) digital model M of the bracket 1, which digital model M is then made available to the computer processor P that operates and controls the robot assembly 2 carrying the additive manufacturing device 7. The second box II then represents the step of moving the head 6 of the additive manufacturing apparatus 7 to a predetermined position Z in the fuselage structure F based on position data in the digital model M and, in this embodiment, depositing one or more layers or regions of adhesive G for bonding the bracket 1 to be formed to the structure F. The third box III represents the step of forming the bracket 1 in situ in the fuselage structure F with the head 6 of the FDM apparatus 7 by sequentially building up the bracket 1 in layers based upon the digital model M of the bracket in the computer processor P. This step includes forming an anchored portion 8 of the bracket 1 which is non-movably fixed to the structure, and forming an operable portion 9 of the bracket 1, such as a strap or tie 11 which is movable relative to the anchored portion 8. The final box IV in drawing Fig. 10 represents the step of connecting the bracket 1 by bonding or fusing at least anchored portion 8 to the CFRP fuselage structure F via the adhesive G, as or when the bracket 1 is formed.

Following the above description of the method and the fixture or bracket 1 itself as well as the ALM apparatus, Fig. 11 of the drawings now schematically illustrates an aircraft A that incorporates a fuselage structure F, in which at least one fixture or bracket 1, and preferably a plurality thereof, has or have been installed according to a method of the present invention.

With reference to Fig. 12 of the drawings, on the other hand, an alternative embodiment is now illustrated schematically. In this embodiment, the inventive method is being carried out on a space station T which is currently in orbit. The space station T includes solar collector modules C, modules H for human occupation, and an antenna module I, all of which are interconnected by a structural framework X. In this example, the method is employed to conduct a repair to a part on the antenna module I. Again, a robot assembly 2, which includes a robotic arm 3 having remotely controlled articulated joints 4 is employed, which avoids the need for an astronaut to undertake a space-walk. The structural framework X may include one or more rails 5 for guiding movement of the robot 2 to the antenna module I. Also, a head 6 of an additive manufacturing apparatus 7 or 3D printer device is mounted at an end region of the robotic arm 3. In this way, the method described above with reference to Figs. 1-9 can be performed with the robot assembly 2 on the space station T to generate and install a new element or fixture 1 to repair the antenna module I. In the event that no rails 5 are available for the robot 2 on the structural framework X, it will be noted that the head 6 of the additive manufacturing apparatus 7 may also be used to generate and install rail members 5 on the framework X of the space station T according to the method of the invention for guiding the robotic assembly 2 to that part of the antenna module I to be repaired.

Although specific embodiments of the disclosure have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment.

In this document, the terms "comprise", "comprising", "include", "including", "contain", "containing", "have", "having", and any variations thereof, are intended to be understood in an inclusive (i.e. non-exclusive) sense, such that the process, method, device, apparatus or system described herein is not limited to those features or parts or elements or steps recited but may include other elements, features, parts or steps not expressly listed or inherent to such process, method, article, or apparatus. Furthermore, the terms "a" and "an" used herein are intended to be understood as meaning one or more unless explicitly stated otherwise. Moreover, the terms "first", "second", "third", etc. are used merely as labels, and are not intended to impose numerical requirements on or to establish a certain ranking of importance of their objects.

### List of Reference Signs

- 1: fixture or bracket
- 2: robot assembly
- 3: robotic arm
- 4: joint or articulation
- 5: rail
- 6: head
- 7: additive manufacturing apparatus
- 8: anchored portion
- 9: operable portion
- 10: holder
- 11: strap or tie
- 12: fastener
- 13: hole
- 14: slot
- 15: pin
- 16: local attachment
- 17: nozzle portion
- 18: supply line
- 19: sensor
- 20: position adjustment mechanism
- 21: threaded rod
- 22: nozzle outlet
- 23: pivot joint
- 24: pivot joint
- F: fuselage structure or shell
- B: brace element
- S: supporting framework
- P: computer processor
- M: digital model
- Z: installation position on fuselage structure or shell
- G: glue or adhesive
- L1: first layer(s)
- L2: second layer(s)
- R: reference marker
- O: operator
- W: work-station
- D: cable or conduit
- A: aircraft
- T: space station
- C: solar collector module
- H: human occupation module
- I: antenna module
- X: structural framework

## Claims

1. A method of installing a fixture (1), such as a bracket, in or on a structure (F) of an aircraft or spacecraft, for mounting or attaching one or more items or systems with respect to the structure (F), comprising the steps of:
arranging a head (6) of an additive manufacturing apparatus (7) in, on or adjacent the structure (F); and
forming the fixture (1) in situ on the structure (F) with the head (6) of the apparatus (7) based on a digital model (M) of the fixture (1),
wherein the fixture (1) is installed in or on the structure (F) by connecting the fixture (1) to the structure (F) as the fixture (1) is formed, and wherein the step of forming the fixture (1) in situ comprises:
forming an anchored portion (8) of the fixture (1) which is non-movably fixed to the structure (F); and
forming an operable portion (9) of the fixture (1) which is movable relative to the anchored portion (2);
wherein the operable portion (9) is formed locally attached to the structure (F) and is separable by peeling or breaking the local attachment, for movement relative to the anchored portion (8).

2. A method according to claim 1, wherein the step of forming the fixture (1) in situ comprises building the fixture (1) sequentially, preferably by generating and building up layers of the fixture (1) on the structure (F) with the head (6) of the apparatus (7), wherein the layers of the fixture (1) are preferably sequentially deposited on the structure (F).

3. A method according to claim 1 or 2, wherein the step of connecting the fixture (1) to the structure (F) includes at least one of: bonding or fusing one or more of the layers of the fixture (1) to the structure (F) as they are generated; and/or forming the fixture (1) in situ in a mechanical fit or a mechanical engagement with part of the structure (F).

4. A method according to claim 3, wherein bonding of the fixture (1) to the structure (F) includes depositing one or more layer or region of adhesive (G) on the structure (F), preferably before generating and building up layers of the fixture (1) on the structure (F), wherein the one or more layer or region of adhesive (G) is deposited at least in a region of the anchored portion (2) of the fixture (1).

5. A method according to any of claims 1 to 4, wherein the anchored portion (8) of the fixture (1) forms a holder (10) for supporting one or more elements (D) of a system to be mounted on the structure (F), wherein the operable portion (9) of the fixture (1) forms a fastener for securing the element(s) (D) to the holder (10).

6. A method according to claim 5, wherein the operable portion (9) is movable and configured to wrap around or encompass the one or more elements (D) in the manner of a strap or tie (11).

7. A method according to any of claims 1 to 7, wherein the three-dimensional digital model (M) of the fixture (1) includes data on a desired position of the fixture (1) within structure (F), wherein the step of forming the fixture (1) in situ includes positioning the head (6) of the additive manufacturing apparatus (7) in or adjacent the structure (F) based upon the digital model (M); whereby the structure (F) preferably includes reference markers (R) for spatial correlation to reference points in the digital model (M) of the fixture (1).

8. A system comprising a structure (F) of an aircraft or spacecraft and a fixture (1) manufactured according to any one of claims 1 to 7, wherein the fixture (1) comprises an anchored portion (8) and an operable portion (9), the operable portion (9) having a local attachment to the structure (F) that is separable by peeling or breaking, for movement relative to the anchored portion (8).

9. A system according to claim 8, wherein the anchored portion (8) of the fixture (1) comprises a holder (10) for supporting one or more elements or items (D) of a system to be mounted on the structure (F), and the operable portion (9) of the fixture (1) comprises a fastener for securing the one or more elements or items (D) to the holder.

10. A system according to claim 8 or claim 9, wherein the operable portion (9) comprises a strap or tie (11) to secure one or more elements (C) of a system to be mounted on the structure (F) to the fixture (1).

11. A system according to any one of claims 8 to 10, wherein the fixture (1) comprises sequentially generated or deposited layers which are bonded or fused to the fuselage structure (F).

12. A system according to any one of claims 8 to 11, wherein the fixture (1) is formed from a polymer material, such as a UV-curable polymer or thermoplastic polymer, e.g., an acrylonitrile butadiene styrene (ABS) or high density polyethylene (HDPE), or from a metal, such as a eutectic metal, including one or more metal powders.

13. A vehicle, especially an aircraft (A) or spacecraft having a system according to any one of claims 8 to 12.

## Patentansprüche

1. Verfahren zum Installieren einer Halterung (1), wie beispielsweise einem Befestigungswinkel, in oder an einer Struktur (F) eines Luft- oder Raumfahrzeugs zum Montieren oder Befestigen eines oder mehrerer Artikel oder Systeme in Bezug auf die Struktur (F), umfassend die Schritte:
Anordnen eines Kopfes (6) einer additiven Fertigungsvorrichtung (7) in, auf oder neben der Struktur (F); und
Bilden der Halterung (1) vor Ort auf der Struktur (F) mit dem Kopf (6) der Vorrichtung (7) basierend auf einem digitalen Modell (M) der Halterung (1),
wobei die Halterung (1) in oder auf der Struktur (F) durch Verbinden der Halterung (1) mit der Struktur (F) beim Bilden der Halterung (1) installiert wird, und wobei der Schritt des Bildens der Halterung (1) vor Ort umfasst:
Bilden eines verankerten Abschnitts (8) der Halterung (1), der nicht beweglich an der Struktur (F) befestigt wird; und
Bilden eines betriebsfähigen Abschnitts (9) der Halterung (1), der relativ zum verankerten Abschnitt (2) beweglich ist;
wobei der betriebsfähige Abschnitt (9) lokal an der Struktur (F) befestigt wird und zum Bewegen relativ zum verankerten Abschnitt (8) durch Abziehen oder Brechen der lokalen Befestigung trennbar ist.

2. Verfahren nach Anspruch 1, wobei der Schritt des Bildens der Halterung (1) vor Ort das aufeinanderfolgende Bilden der Halterung (1) vorzugsweise durch Erzeugen und Aufbauen von Schichten der Halterung (1) auf der Struktur (F) mit dem Kopf (6) der Vorrichtung (7) umfasst, wobei die Schichten der Halterung (1) vorzugsweise nacheinander auf die Struktur (F) aufgebracht werden.

3. Verfahren nach Anspruch 1 oder 2, wobei der Schritt des Verbindens der Halterung (1) mit der Struktur (F) mindestens eines von Folgendem umfasst: Kleben oder Verschmelzen einer oder mehrerer der Schichten der Halterung (1) während des Erzeugens mit der Struktur (F); und/oder Bilden der Halterung (1) vor Ort in einem mechanischen Sitz oder einem mechanischen Eingriff mit einem Teil der Struktur (F) .

4. Verfahren nach Anspruch 3, wobei das Kleben der Halterung (1) auf die Struktur (F) das Aufbringen einer oder mehrerer Schichten oder Bereiche von Klebstoff (G) auf die Struktur (F) vorzugsweise vor dem Erzeugen und Aufbauen von Schichten der Halterung (1) auf der Struktur (F) umfasst, wobei die eine oder mehreren Schichten oder Bereiche von Klebstoff (G) mindestens in einem Bereich des verankerten Abschnitts (2) der Halterung (1) aufgebracht werden.

5. Verfahren nach einem der Ansprüche 1 bis 4, wobei der verankerte Abschnitt (8) der Halterung (1) einen Halter (10) zum Tragen eines oder mehrerer Elemente (D) eines an der Struktur (F) zu montierenden Systems bildet, wobei der betriebsfähige Abschnitt (9) der Halterung (1) ein Befestigungselement zum Befestigen des Elements/der Elemente (D) am Halter (10) bildet.

6. Verfahren nach Anspruch 5, wobei der betriebsfähige Abschnitt (9) beweglich und dazu eingerichtet ist, das eine oder die mehreren Elemente (D) wie ein Band oder eine Schlinge (11) zu umwickeln oder zu umschließen.

7. Verfahren nach einem der Ansprüche 1 bis 7, wobei das dreidimensionale digitale Modell (M) der Halterung (1) Daten über eine gewünschte Position der Halterung (1) innerhalb der Struktur (F) umfasst, wobei der Schritt des Bildens der Halterung (1) vor Ort das Positionieren des Kopfes (6) der additiven Fertigungsvorrichtung (7) in oder neben der Struktur (F) basierend auf dem digitalen Modell (M) umfasst;
wobei die Struktur (F) vorzugsweise Referenzmarkierungen (R) zur räumlichen Korrelation zu Referenzpunkten im digitalen Modell (M) der Halterung (1) umfasst.

8. System, umfassend eine Struktur (F) eines Luft- oder Raumfahrzeugs und eine Halterung (1), die nach einem der Ansprüche 1 bis 7 hergestellt wird, wobei die Halterung (1) einen verankerten Abschnitt (8) und einen betriebsfähigen Abschnitt (9) umfasst, wobei der betriebsfähige Abschnitt (9) eine lokale Befestigung an der Struktur (F) aufweist, die zum Bewegen relativ zum verankerten Abschnitt (8) durch Abziehen oder Brechen trennbar ist.

9. System nach Anspruch 8, wobei der verankerte Abschnitt (8) der Halterung (1) einen Halter (10) zum Tragen eines oder mehrerer Elemente oder Artikel (D) eines an der Struktur (F) zu montierenden Systems umfasst und der betriebsfähige Abschnitt (9) der Halterung (1) ein Befestigungselement zum Befestigen der einen oder mehreren Elemente oder Artikel (D) am Halter umfasst.

10. System nach Anspruch 8 oder Anspruch 9, wobei der funktionsfähige Abschnitt (9) ein Band oder eine Schlinge (11) zum Befestigen eines oder mehrerer an der Struktur (F) zu montierenden Elemente (C) eines Systems an der Halterung (1) umfasst.

11. System nach einem der Ansprüche 8 bis 10, wobei die Halterung (1) nacheinander erzeugte oder aufgebrachte Schichten umfasst, die mit der Rumpfstruktur (F) verklebt oder verschmolzen werden.

12. System nach einem der Ansprüche 8 bis 11, wobei die Halterung (1) aus einem Polymermaterial, wie beispielsweise einem UV-härtenden Polymer oder thermoplastischen Polymer, wie beispielsweise einem Acrylnitril-Butadien-Styrol (ABS) oder hochdichten Polyethylen (HDPE), oder aus einem Metall, wie beispielsweise einem eutektischen Metall, mit einem oder mehreren Metallpulvern gebildet wird.

13. Fahrzeug, insbesondere Luftfahrzeug (A) oder Raumfahrzeug mit einem System nach einem der Ansprüche 8 bis 12.

## Revendications

1. Procédé d'installation d'un élément de fixation (1), tel qu'un support, dans ou sur une structure (F) d'un aéronef ou d'un engin spatial, pour monter ou fixer un ou plusieurs éléments ou systèmes par rapport à la structure (F), comprenant les étapes consistant à:
disposer une tête (6) d'un appareil de fabrication additive (7) dans, sur ou à proximité de la structure (F); et former l'élément de fixation (1) in situ sur la structure (F) avec la tête (6) de l'appareil (7) basée sur un modèle numérique (M) de l'élément de fixation (1),
l'élément de fixation (1) étant installé dans ou sur la structure (F) en connectant l'élément de fixation (1) à la structure (F) lorsque l'élément de fixation (1) est formé, et l'étape de formation de l'élément de fixation (1) in situ consistant à:
former une partie ancrée (8) de l'élément de fixation (1) qui est fixée de manière immobile à la structure (F); et
former une partie actionnable (9) de l'élément de fixation (1) qui est mobile par rapport à la partie ancrée (2);
la partie actionnable (9) étant formée de manière localement fixée à la structure (F) et étant séparable par pelage ou rupture de la fixation locale, pour un mouvement par rapport à la partie ancrée (8).

2. Procédé selon la revendication 1, dans lequel l'étape consistant à former l'élément de fixation (1) in situ comprend la construction séquentielle de l'élément de fixation (1), de préférence en générant et en constituant des couches de l'élément de fixation (1) sur la structure (F) avec la tête (6) de l'appareil (7), les couches de l'élément de fixation (1) étant de préférence déposées séquentiellement sur la structure (F).

3. Procédé selon la revendication 1 ou 2, dans lequel l'étape de connexion de l'élément de fixation (1) à la structure (F) comprend au moins l'une des étapes consistant à: lier ou fusionner une ou plusieurs des couches de l'élément de fixation (1) à la structure (F) lorsqu'elles sont produites; et/ou former l'élément de fixation (1) in situ dans un ajustement mécanique ou un engagement mécanique avec une partie de la structure (F).

4. Procédé selon la revendication 3, dans lequel la liaison de l'élément de fixation (1) à la structure (F) comprend le dépôt d'une ou plusieurs couches ou régions d'adhésif (G) sur la structure (F), de préférence avant de générer et de constituer des couches de l'élément de fixation (1) sur la structure (F), dans lequel l'une ou plusieurs couches ou régions d'adhésif (G) est déposée au moins dans une région de la partie ancrée (2) de l'élément de fixation (1).

5. Procédé selon l'une quelconque des revendications 1 à 4, dans lequel la partie ancrée (8) de l'élément de fixation (1) forme un support (10) pour supporter un ou plusieurs éléments (D) d'un système à monter sur la structure (F), dans lequel la partie opérationnelle (9) de l'élément de fixation (1) forme une fixation pour fixer le ou les éléments (D) au support (10).

6. Procédé selon la revendication 5, dans lequel la partie actionnable (9) est mobile et configurée pour enrouler ou entourer le ou les éléments (D) à la manière d'une sangle ou d'une attache (11).

7. Procédé selon l'une quelconque des revendications 1 à 7, dans lequel le modèle numérique tridimensionnel (M) de l'élément de fixation (1) comprend des données sur une position souhaitée de l'élément de fixation (1) dans la structure (F), l'étape de formation de l'élément de fixation (1) in situ comprenant le positionnement de la tête (6) de l'appareil (7) de fabrication additive dans ou à proximité de la structure (F) basée sur le modèle numérique (M); la structure (F) comprenant de préférence des marques de référence (R) pour corrélation spatiale aux points de référence dans le modèle numérique (M) de l'élément de fixation (1).

8. Système comprenant une structure (F) d'un aéronef ou d'un engin spatial et un élément de fixation (1) fabriqué selon l'une quelconque des revendications 1 à 7, dans lequel l'élément de fixation (1) comprend une partie ancrée (8) et une partie opérationnelle (9), la partie opérationnelle (9) ayant une fixation locale à la structure (F) qui peut être séparée par pelage ou rupture, pour un mouvement relatif à la partie ancrée (8).

9. Système selon la revendication 8, dans lequel la partie ancrée (8) de l'élément de fixation (1) comprend un support (10) pour supporter un ou plusieurs éléments ou articles (D) d'un système à monter sur la structure (F), et la partie opérationnelle (9) de l'élément de fixation (1) comprend une attache pour fixer un ou plusieurs éléments ou articles (D) au support.

10. Système selon la revendication 8 ou la revendication 9, dans lequel la partie opérationnelle (9) comprend une sangle ou une attache (11) pour fixer un ou plusieurs éléments (C) d'un système devant être monté sur la structure (F) à l'élément de fixation (1).

11. Système selon l'une quelconque des revendications 8 à 10, dans lequel l'élément de fixation (1) comprend des couches générées ou déposées séquentiellement qui sont liées ou fusionnées à la structure du fuselage (F).

12. Système selon l'une quelconque des revendications 8 à 11, dans lequel l'élément de fixation (1) est formé d'un matériau polymère, tel qu'un polymère durcissable aux UV ou un polymère thermoplastique, par exemple un acrylonitrile butadiène styrène (ABS) ou un polyéthylène haute densité (HDPE), ou d'un métal, comme un métal eutectique, comprenant une ou plusieurs poudres métalliques.

13. Véhicule, en particulier aéronef (A) ou engin spatial (T), ayant un système selon l'une quelconque des revendications 8 à 12.
